# EUROPEAN PATENT SPECIFICATION

(11) **EP 1 855 873 B1**
(45) Date of publication and mention of the grant of the patent: **30.12.2009**
(21) Application number: 06737519.6
(22) Date of filing: 08.03.2006
(51) Int. Cl.: B29D 11/00

(54) **METHOD AND APPARATUS FOR COATING OPTICS**
VERFAHREN UND VORRICHTUNG ZUM BESCHICHTEN VON OPTIKEN
PROCEDE ET APPAREIL POUR REVETEMENT OPTIQUE

(30) Priority: 09.03.2005 US 659946 P
(43) Date of publication of application: 21.11.2007
(73) Proprietor: The Walman Optical Company, Minneapolis, MN 55411 (US)
(72) Inventor: KIRCHOFF, David, R., Brooklyn Park, Minnesota 55445 (US); TSCHIDA, Mike, Oakdale, Minnesota 55128 (US); Boho, Chuck, Coon Rapids, Minnesota 55448 (US); HOSTRAWSER, Cary, Dayton, Minnesota 55327 (US); CLYNE, Mike, Otsego, Minnesota 55330 (US)
(74) Representative: Molnia, David
(86) International application number: PCT/US2006/008353
(87) International publication number: WO 2006/099012

(56) References cited:
- EP-A- 0 515 149
- US-A- 5 820 673

## Description

### Field of the Invention

The present invention pertains to coating work pieces and more particularly to coating optics such as eyeglass lenses.

### Background of the Invention

Transparent plastic materials such as eyeglass lenses, television screen face plates and the protective coatings on photographic prints often are quite soft and are subject to becoming dull and hazy due to scratching and abrasion during use. Polycarbonate eyeglass lenses, for example, are strong and shatter resistant but also are relatively soft and susceptible to scratching.

The optical, and particularly eyeglass, industry has made considerable progress in the use of coatings to improve the surface properties of desired substrate materials, such as polycarbonates. Common coatings include scratch resistant coatings and abrasion resistant coatings. Some coatings, particularly abrasion resistant coatings, remain sufficiently complex in their chemistry and use that they must be applied in a factory or manufacturing setting. Other coatings, however, and particularly scratch resistant coatings, have progressed to the point where they can be applied on site, by ophthalmology providers.

Scratch resistant coatings are typically applied using either thermally or UV-cured compositions. Most scratch resistant coatings applied by lens manufacturers are thermally cured. The lenses are dip coated (covering both sides) and cured in large ovens for up to 16 hours. Manufacturers tend to individualize the composition and thermal cure process to the specific index of the lens being coated. Thermal cure coatings require highly trained operators and tend to provide the most effective scratch resistant coatings.

UV-cured scratch resistant coatings, by contrast, are typically applied in a spin technique, in which the coating composition is applied only to the "backside" of the lens, which in turn, becomes the inward facing surface in a pair of eyeglasses. The coating is often tintable, and can be applied to lenses with any specific index. The primary advantages of such coatings are that they permit a faster cure cycle, and that relatively less operator training is required. Automated and semi-automated apparatuses for coating lenses are commercially available, e.g., as the Mini-II N/V Coating System and the M/R III System available from Ultra Optics, Brooklyn Park, MN. An apparatus for coating a lens and curing the coating is disclosed in US 5, 820, 673 which discloses the preamble of claim 1.

There remains a need in the industry for apparatuses and related materials and methods that can be used to provide coatings of high quality, yet in a manner that provides an ever improved combination of such features as speed, expense, and ease of operator use.

### Summary of the Invention

The present invention provides a lens coating system and a method for coating a pair of eyeglass lenses according to claims 1 and 25; preferred embodiments are set out in the dependent claims.

### Brief Description of the Drawings

The following drawings are illustrative of particular embodiments of the present invention and therefore do not limit the scope of the invention. The drawings are not to scale (unless so stated) and are intended for use in conjunction with the explanations in the following detailed description. Embodiments of the present invention will hereinafter be described in conjunction with the appended drawings, wherein like numerals denote like elements.
Figure 1 is a schematic of a person wearing a pair of eyeglasses.
Figure 2A is a cross-sectional view of an exemplary lens assembly.
Figure 2B is perspective view of a tray for holding a pair of lens assemblies.
Figure 2C is a flow chart outlining some methods of the present invention.
Figure 3 is a perspective view of an enclosure for a lens coating system according to some embodiments of the present invention.
Figure 4 is a top plan view of a lens coating system, according to some embodiments of the present invention.
Figures 5A-B are a perspective view and a side view, respectively, of a pick and place unit for a lens coating system, according to some embodiments of the present invention.
Figure 5C is a perspective view of a pair of gripper assemblies of the unit shown in Figures 5A-B.
Figures 6A-B are a perspective view and a side view, respectively, of a dial or spider assembly for a lens coating system, according to some embodiments of the present invention.
Figures 7A-B are side view and a rear view, respectively, of a spindle assembly for a lens coating system, according to an exemplary embodiment of the present invention.
Figures 8A-C are a perspective view, a top view, and sectional schematic, respectively, of a high pressure wash and drying station, according to an exemplary embodiment of the present invention.
Figure 9A is a perspective view of a coating element for a coating station, according to an exemplary embodiment of the present invention.
Figure 9B is a sectional schematic of a station including the element of Figure 9A.
Figures 10A-C are a perspective view, a side view and a front view, respectively, of a curing station, according to an exemplary embodiment of the present invention.
Figures 11A-B are a perspective view and a top view, respectively, of a magazine shuttle assembly for a lens coating system, according to some embodiments of the present invention.

### Detailed Description

The following detailed description is exemplary in nature and is not intended to limit the scope, applicability, or configuration of the invention in any way. Rather, the following description provides practical illustrations for implementing exemplary embodiments of the present invention. Examples of constructions, materials; dimensions, and manufacturing processes are provided for selected elements, and all other elements employ that which is known to those of skill in the field of the invention. Those skilled in the art will recognize that many of the examples provided have suitable alternatives that can be utilized.

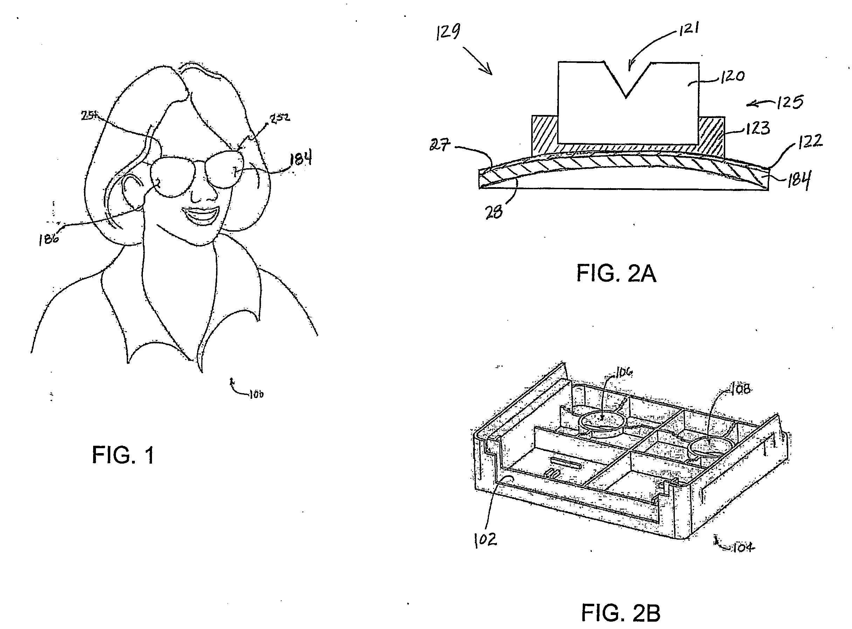

Figure 1 is a schematic of a person 100 wearing a pair of eyeglasses 252. Figure 1 illustrates eyeglasses 252 including a frame 254 in which a left lens 184 and a right lens 186 are mounted. Each lens 184, 186 may have been prepared according to a prescription of person 100, and according to desires of person 100, for example, pertaining to frame 254 selected by person 100 and to one or more types of lens coating selected by person 100.

Figure 2A is a cross-sectional view of an exemplary lens assembly 129. Figure 2A illustrates lens assembly 129 including lens 184 fixed to a mounting block assembly 125, which includes a mounting block 120 and an intermediate member 123 that fixes mounting block 120 to a first major surface 27 of lens 184; a protective film 122 is shown intervening between surface 27 and intermediate member 123. Lens 184 would have been fixed to mounting block assembly 125 as a preliminary step in a process to form lens 184; mounting block assembly 125 provides a means for grasping lens 184 during grinding, polishing, and cleaning of a second major surface 28 of lens 184. Intermediate bonding member 123 may be one or a combination of various materials; according to some embodiments, member 123 comprises a metal alloy that is cast in place between mounting block 120 and film 122; alternately, member 123 comprises an adhesive or a wax, which may not require protective film 122.

Figure 2B is perspective view of a tray 104 for holding a pair of lens assemblies, each, for example, like assembly 129 illustrated in Figure 2B. Tray 104 may be used to transport a pair of lenses between processing systems, for example, between a grinding system and a polishing system and between the polishing system and a cleaning system or a coating system. Figure 2B illustrates tray 104 including a first cavity 106 for holding a lens, for example left lens 184, and a second cavity 108 for holding another lens, for example, right lens 186; each cavity may be dimensioned to receive a mounting block fixed to each lens, for example mounting block 120 shown in Figure 2A, such that a second major surface of each lens, which is to be ground, polished and rinsed, as described for lens 184 of Figure 2A, faces outward from tray 104. To assure that the lenses are held in a stable prescribed orientation within tray 104, each cavity 106, 108 may include a feature interfacing with a notch 121 in mounting block 120 of each lens assembly (Figure 2A).

Figure 2B further illustrates tray 104 including a receptacle 102 to hold an information card to guide the processing of lenses held in tray 104; the card includes information, for example, pertaining to grinding parameters and/or to a type of coating. Alternately, a bar code sticker providing for the automatic transfer of this type of pertinent information to each processing system may be adhered to a side of tray 104. According to preferred embodiments of the present invention, lens assemblies as depicted in Figure 2A, are taken directly from trays, such as tray 104, into a lens coating system of the present invention, thus eliminating additional handling of lenses after grinding and polishing and prior to coating.

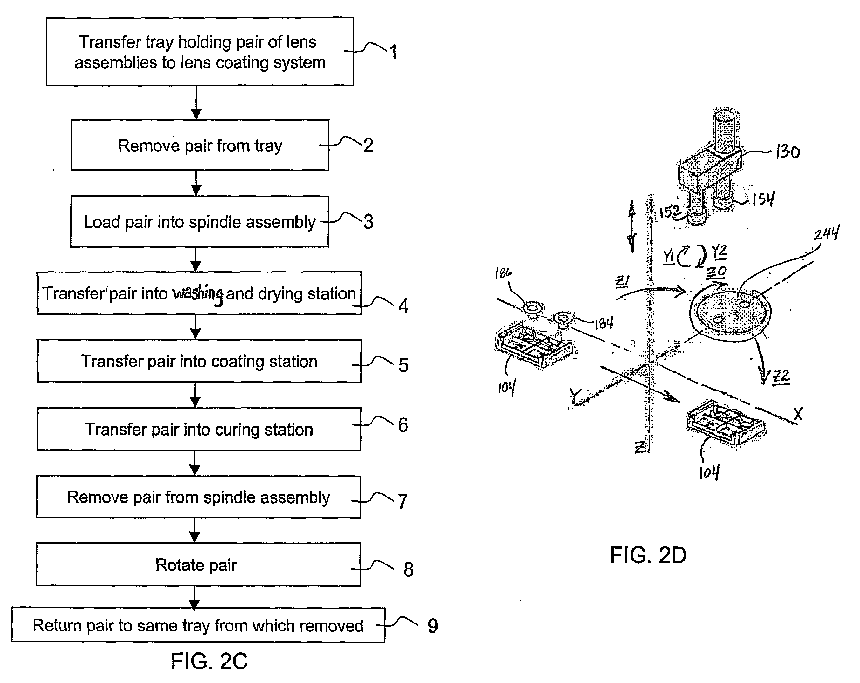

Figure 2C is a flow chart outlining some methods of the present invention. According to the outlined method, an initial step 1 involves transferring trays holding lens pairs, which are ready for coating, directly to a coating system; step 1 need not involve disassembling lenses from mounting blocks, since a coating system, according to embodiments of the present invention, handles the lenses as lens assemblies including mounting block assemblies, for example as depicted in Figure 2A. Although preferred embodiments of the present invention include handling of lens assemblies in pairs, as indicated in Figure 2C and depicted in subsequent figures, alternate embodiments of the invention may handle a fewer or greater number of lens assemblies at each process step. According to some embodiments, step 1 further includes inputting information, for example, from a card carried the tray, or from a bar code sticker adhered to a side of the tray, into the coating system, either automatically or manually; the information may include the type of coating required for the pair of lenses. The lens coating system may include an input conveyer which transfers the tray to a position, such as an input platform, where the pair of lens assemblies are removed from the tray, per step 2. Removal of the pair may be accomplished automatically or manually and likewise for the loading of the pair into a spindle assembly, per step 3. According to some embodiments of the present invention, the spindle assembly is one of a plurality of spindle assemblies that each include a pair of adaptors for holding each lens assembly such that second major surface 28 (Figure 2A) of each lens is directed away from the adaptors and into each station of the coating system.

Steps 4-6 of Figure 2C describe a sequence of transfers, into processing stations, of the lens assembly pair by the spindle assembly. According to the illustrated method, the lenses are first transferred into a high pressure wash and drying station (4), and then into a coating station (5), and then into a curing station (6). It may be appreciated that embodiments of the present invention are not limited to these particular processes, perhaps with the exception of coating, and additional or fewer processing stations are within the scope of the present invention. After the lenses are treated in each station, the pair of lens assemblies are removed from the spindle assembly, per step 7, in order to be returned or replaced, per step 9, to the tray from which they were removed. Again, removal of the pair from the spindle assembly and returning or replacing the pair to the tray may be accomplished manually or automatically. Following step 9, an output conveyor coupled to the system may transfer the tray away from the system to another location.

According to some embodiments of the present invention, the lens pair needs to be rotated, per step 8, prior to being returned to the tray, so that each lens of the pair will be returned to the same location in the tray from which each lens left in step 2. Figure 2D is a schematic, including reference X, Y and Z axes, for following a transfer of lens pairs and trays, according to some embodiments of the present invention. Figure 2D illustrates lenses 184,186 having been lifted from tray 104, per step 2 of Figure 2C; a mechanism gripping the lenses 184, 186 rotates from tray 104 about the Z axis, per arrow Z1 to bring lenses beneath a holding or spindle assembly 130 of the system where the gripping mechanism rotates upward, per arrow Y1, to direct the lenses toward corresponding holding cups or adaptors 152 and 154 of spindle assembly 130; the gripping mechanism then travels upward, along the Z axis, to insert the mounting blocks of lenses 184, 186 into the adaptors 152, 154. According to some embodiments, while spindle assembly 130 transfers lenses 184, 186 from station to station of the system, a shuttling mechanism, for example, a magazine assembly, automatically transfers the tray from a drop-off position, shown on the left hand side of Figure 2D, to a re-loading position, shown on the right hand side of Figure 2D. After spindle assembly 130 has transferred lenses 184, 186, through the various stations of the coating system, for example, per steps 4-6 of Figure 2C, spindle assembly 130 returns to the position shown, where the gripping mechanism takers lenses 184, 186 back from spindle assembly 130 and rotates downward, per arrow Y2, to transfer lenses 184, 184 into a pair of lens nests 244 on a turntable that rotates lenses 184, 186 180 degrees, per arrow Z0, so that lenses 184, 186 will be properly oriented for the gripping mechanism to return them to tray 104. After turntable 244 rotates lenses 184, 186, the gripping mechanism grasps lenses 184, 186 and rotates about the Z axis, per arrow Z2, to tray 104, which is now at the re-loading position, and returns lenses 184, 186 to tray 104, such that each lens 184, 186 is at a same location in tray 104 as before.

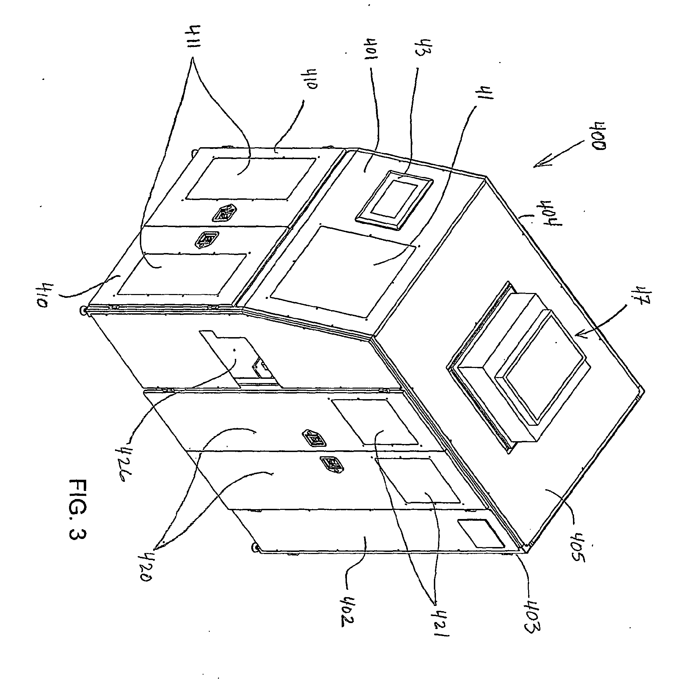

Each of the steps outlined in Figures 2C-D may be accomplished according to the exemplary embodiments of various components of an automated lens coating system that will now be presented in conjunction with Figures 3-11B.

Figure 3 is a perspective view of an enclosure 400 for a lens coating system, according to some embodiments of the present invention. Figure 3 illustrates enclosure 400 including a front panel 401, two opposing side panels 402, 404, a rear panel 403, and a top panel 405, in which a HEPA filter unit 47 is mounted. According to the illustrated embodiment, front panel doors 410 and side panel doors 420 provide access to within enclosure 400, and each include windows 411 and 421, respectively. Another window 41 is shown in front panel 401 alongside a control and display panel 43, thus an operator may see within enclosure 400 and utilize panel 43 to provide any necessary input to the system. According to an exemplary embodiment of the present invention, panel 43 includes a start button, for activating the coating system, and trouble shooting features, for example, displays indicating types and locations of faults or errors within the system, as picked up by a variety of sensors located throughout the system, and a manual override of at least a portion of the automatic control of the system.

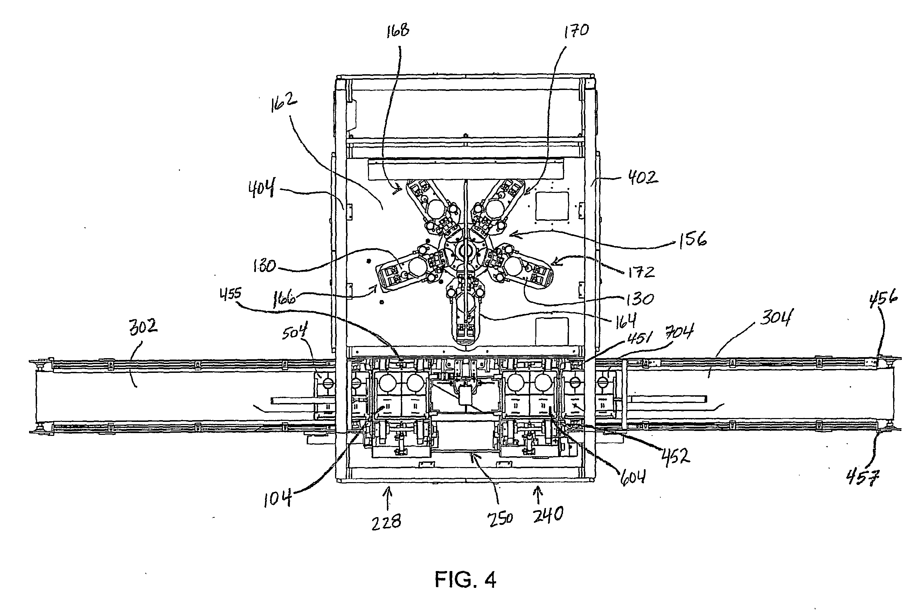

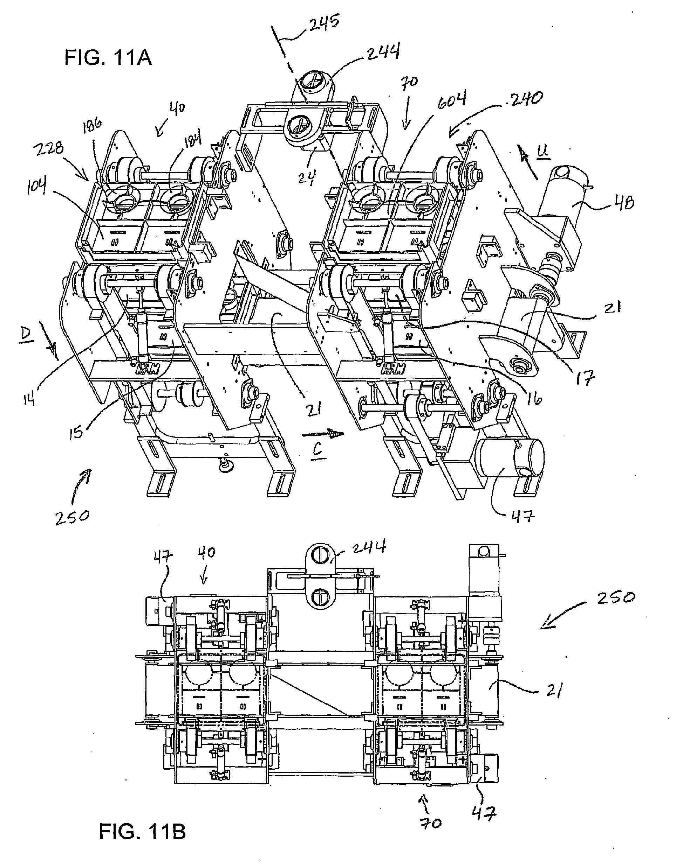

Figure 4 is a top plan view of a lens coating system according to some embodiments of the present invention, wherein top panel 405 and front panel 401 of enclosure 400 have been removed. Figure 4 illustrates a front end portion of the enclosure housing a magazine shuttle assembly 250 for trays, such as tray 104; magazine shuttle assembly 250 will be described in greater detail in conjunction with Figures 11A-B. Figure 4 further illustrates an input conveyor 302, on which each tray carrying a pair of lens assemblies, for example, like lens assembly 129 illustrated in Figure 2A, travels to enter enclosure 400, and an output conveyor 304, on which each tray travels upon exiting enclosure 400 with the same pair of lens assemblies as the tray entered with. Referring back to Figure 3, it can be seen that an opening 426 in side panel 402 provides an exit from enclosure 400 to conveyor 304 and it will be appreciated that a similar opening is present in side panel 404 to provide an entrance from input conveyor 302.

In Figure 4, a tray 504 is shown at an end of conveyor 302 in the entrance opening of enclosure 400, ready to be fed into magazine assembly 250, tray 104 is shown in a first, or drop off position 228 on an input platform of magazine assembly 250, another tray 604 is shown in a re-loading position 240 on an output platform of magazine assembly 250, and yet another tray 704 is shown at an end of conveyer 304 exiting enclosure 400. According to the illustrated embodiment, a sensor 455, which may be a fiber optic sensor, for example, an FS-V20 dual digital fiber optic sensor sold by Keyence, is disposed in proximity to the input platform, or first position 228 in order to detect tray 104. Figure 4 further illustrates another sensor 451/452, for example, a PZ2 sensor sold by Keyence, including a photo electric light source 451 and a reflector 452, each mounted on either side of conveyor 304, being disposed in proximity to the output platform, or re-loading position 240, in order to detect the presence tray 704, having been re-loaded. Another sensor 456 /457, which may be of the same type as sensor 451/452, is also shown in Figure 4, being mounted near an end of conveyor 304, to detect when conveyor 304 is backed up, or filled to capacity.

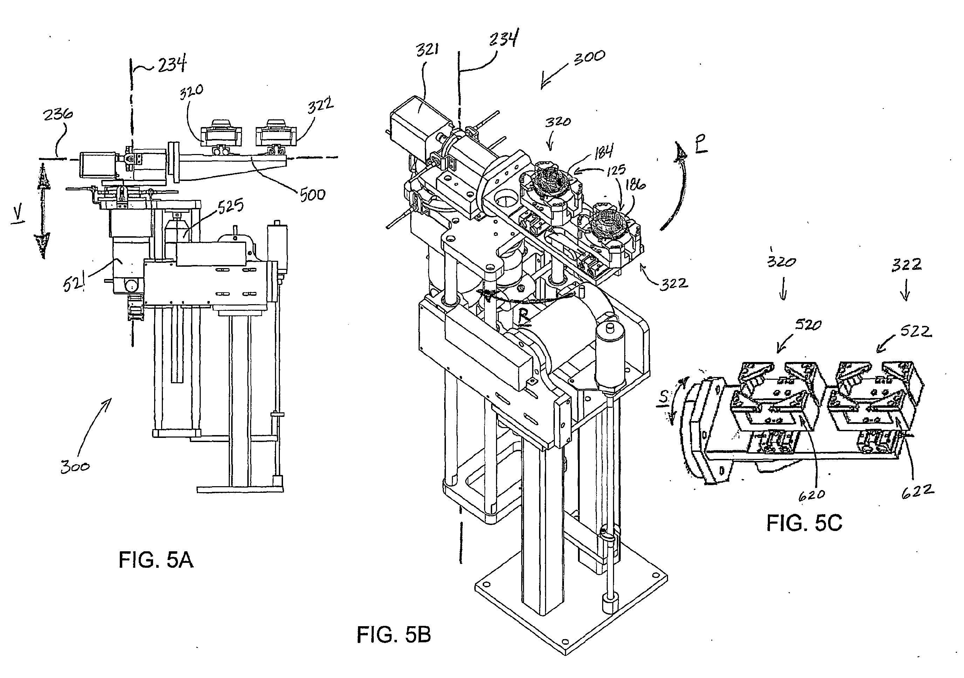

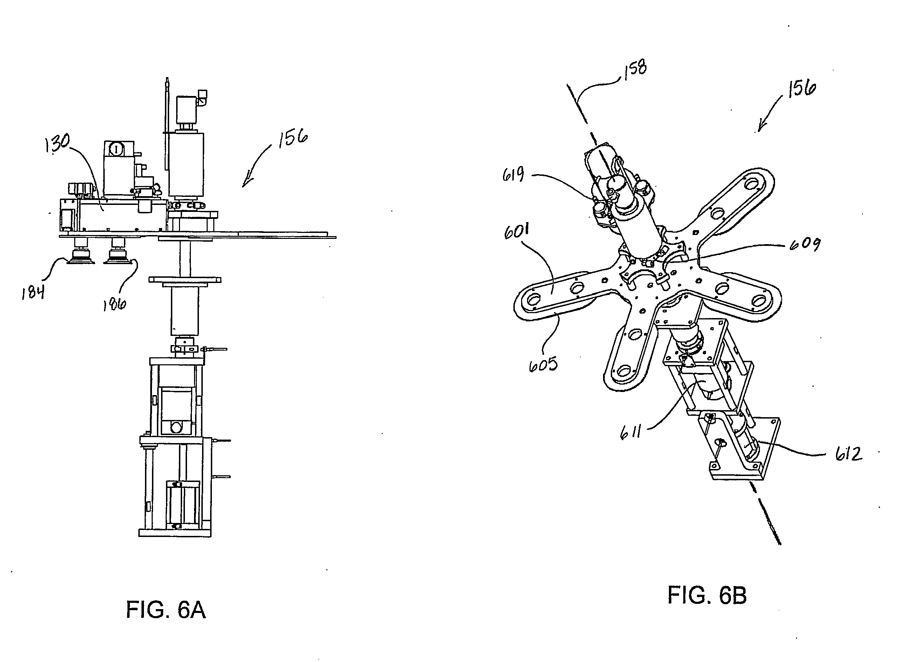

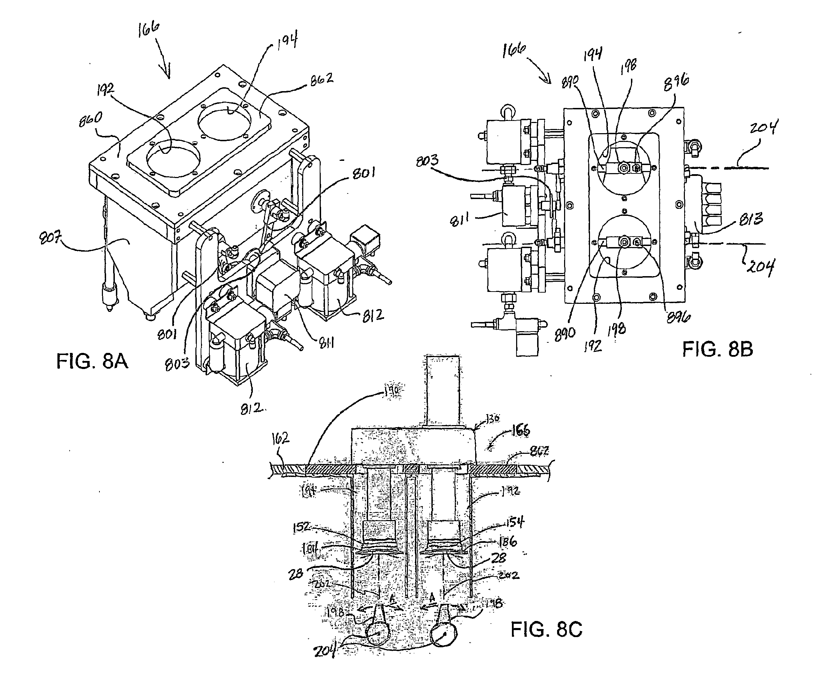

Figure 4 further illustrates a rear end portion of enclosure 400 housing a dial or spider assembly 156 on which a plurality of spindle assemblies 130 are mounted; the spider and spindle assemblies will be described in greater detail in conjunction with Figures 6A-7C. According to the illustrated embodiment, each tray enters enclosure 400, via conveyor 302, carrying a pair of lens assemblies and each tray exits enclosure 400, via conveyor 304, carrying the same pair of lens assemblies with which the tray entered. Figure 4 shows tray 104 having been transferred into drop off position 228 on magazine assembly 250 where a pair of automated grippers, for example as illustrated in Figures 5A-C, will transfer the pair of lens assemblies from the tray to one of spindle assemblies 130, at a pick up point 164; spider 156 will then rotate spindle assembly 130 to transfer the lens assemblies from pick up point 164 to various stations 166, 168, 170 and 172 of the system, which are disposed below a deck or plate 162. Figure 4 shows tray 604, having been shuttled through the magazine assembly 250 to re-loading position 240 where the pair of grippers will transfer the pair of lens assemblies that entered in tray 604 back into tray 604. The various stations of the system will be described in greater detail in conjunction with Figures 8A-10C.

Figures 5A-B are a side view and a perspective view, respectively, of a pick and place unit 300 for a lens coating system, according to some embodiments of the present invention; and Figure 5C is a perspective view of a pair of gripper assemblies 320 and 322. Figures 5A-B illustrate pick and place unit including a cantilever arm 500 on which a first gripper 320 and a second gripper 322 are mounted for rotation, being driven by a gear motor 321; each gripper 320, 322 includes a first pair of opposing grip blades 520, 522 and a second pair of opposing grip blades 620, 622, each slideably mounted to open and close, for example via pneumatic actuation, around mounting block assemblies 125, which are coupled to lenses 184 and 186. With reference to Figure 5B, it may be seen that grippers 320, 322 hold the lens assemblies such that lenses 184, 186 are disposed below grip blades 520.

According to the illustrated embodiment cantilever arm 500 rotates about axis 236 (Figure 5A), per arrow S (Figure 5C), from a first orientation, wherein grippers 320, 322 face downward to pick up lens assemblies from a tray at drop off position 228 of the shuttle assembly 250 in Figure 4, to a second orientation, as illustrated in Figures 5A-B, wherein grippers 320, 322 face upward toward one of spindle assemblies 130, which is positioned at pick up point 164 (Figure 4), to load the lens assemblies therein. After spindle assembly 130 has transferred the lens assemblies to each station 168, 170, 170 and 172, grippers 320, 322 receive lens assemblies back from spindle assembly 130 and rotate back downward, per arrow S, to drop the lens assemblies back into the tray that has been shuttled to re-loading position 240 of shuttle assembly 250. In order to accomplish this 'pick and place' function as described for the illustrated embodiment, arm 500 moves up and down, per arrow V, and further rotates about axis 234 in a first direction, per arrow P, to pick up lens assemblies at first position 228 (Figure 4), and then back to the position shown in Figures 5A-B, corresponding to pick up point 164 shown in Figure 4, to transfer the assemblies into the spindle assembly 130, and then, per arrow R, to return the lens assemblies back to the tray now located at re-loading position 240 (Figure 4). According to the illustrated embodiment, rotation per arrows P and R is actuated by motor 521 and movement per arrow V is actuated by a ball screw drive 525 (Figure 5A).

Figures 6A-B are a side view and a perspective view, respectively, of dial or spider assembly 156 for a lens coating system, according to some embodiments of the present invention. Figure 6B illustrates spider assembly 156 including five arms 601 and Figure 6A illustrates one of spindle assemblies 130 mounted on one of arms 601. Figure 6B further illustrates spider assembly 156 including an axis 158, about which arms 601 rotate, driven by a motor 611, i.e. a DC gear motor, to position spindle assemblies 130 over each station of the system; arms 601 are further adapted to move along axis 158, via air cylinder 612, in order to lower and raise spindle assemblies 130 into, and out of, each station of the lens coating system, for example, stations 166, 168, 170 and 172 shown in Figure 4 and further described below. According to the illustrated embodiment, up to five pair of lenses may be held on spider assembly 156, one pair by each spindle assembly 130 coupled to each arm 601.

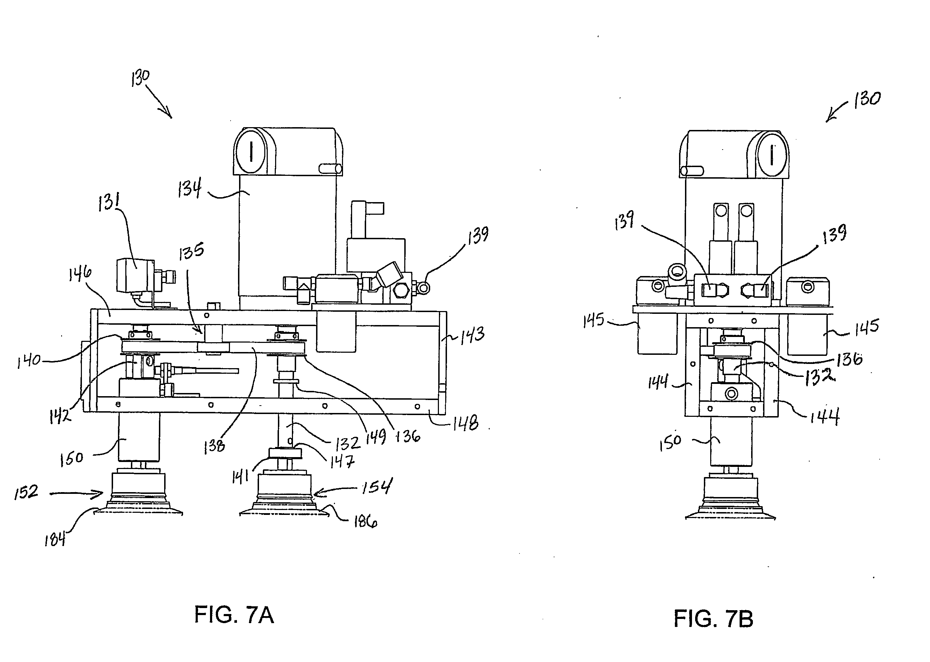

Figures 7A-B are side view and a rear view, respectively, of spindle assembly 130 holding lenses 184, 186 for a lens coating system, according to an exemplary embodiment of the present invention. In Figure 7A, a side plate 144 of spindle assembly 130 is removed to view an interior portion; and, in Figure 7B, a rear plate 143 of spindle assembly is removed to likewise view the interior. Figures 7A-B illustrate spindle assembly 130 including first and second lens cup adaptors 152 and 154, respectively into which the mounting block assemblies, which are coupled to each of lenses 184, 186, are inserted. Figures 7A-B further illustrate spindle assembly including joints 139 for coupling with a vacuum manifold 609 of spider assembly 156 (Figure 6B), which is supplied by a vacuum pump located in proximity to a lower end of spider assembly 156; according to the illustrated embodiment, each adaptor 152, 154 includes a suction cup interfacing with the corresponding lens and employs suction, augmented by the vacuum source, to hold lenses 184, 186. Figure 7B further illustrates jars 145 providing reservoirs for any fluid which may inadvertently be drawn up into spindle assembly 130 at an interface between lenses 184, 186 and the suction cups. Figure 7A further illustrates one of two pressure sensors 131 (second sensor 131 located behind that shown in Figure 7A), for example, a vacuum sensor available from Parker Convum, to detect the quality of vacuum between adaptors 152, 154 and lenses 184, 186, which is an indicator of how well lenses are held by adaptors 152, 154; an insufficient vacuum may indicate that the lens assembly is not properly oriented within the adaptor, and a signal from sensor 131 can cause adaptors 152, 154 to release the lens assemblies into grippers 320, 322 (Figures 5A-C), which then place the lens assemblies into lens nest pair 244 (Figures 11A-B) where grippers 320, 322 (Figures 5A-C) can then re-grip the lens assemblies for re-loading in spindle assembly 130. Lens nest pair 244 will be described in greater detail in conjunction with Figures 11A-B.

According to some embodiments of the present invention, lens cup adaptors 152, 154 are adapted to rotate or spin lenses 184, 186 to facilitate processes performed on lenses 184, 186 in some of the stations of the coating system. Accordingly, Figures 7A-B further illustrate spindle assembly 130 including a DC motor 134 to spin a drive shaft 132, which is coupled to second adaptor 154; a driven shaft 142, which is coupled to first adaptor 152, is driven by drive shaft 132, via a belt 138 mounted on pulleys 136 and 140. Figure 7A further illustrates a tensioning cam 135 for belt 138. Those skilled in the art will appreciate that bearings support the rotation of each shaft 132, 142; in Figure 7A, a bearing housing 150 is shown about driven shaft 142, but is removed from about drive shaft 132, for illustrative purposes, to show a housing ring 141, a retaining ring 147 and a seal 149 of the bearing.

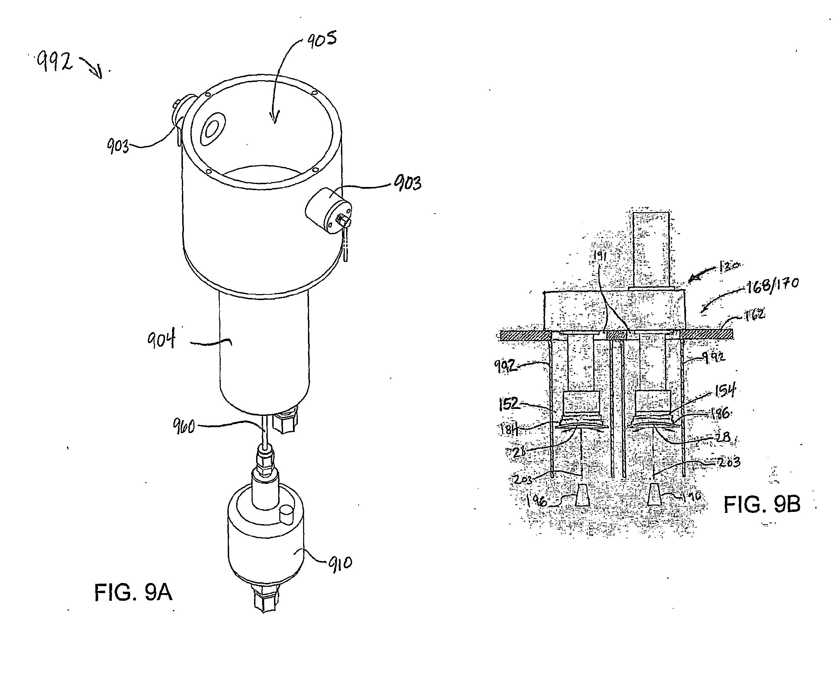

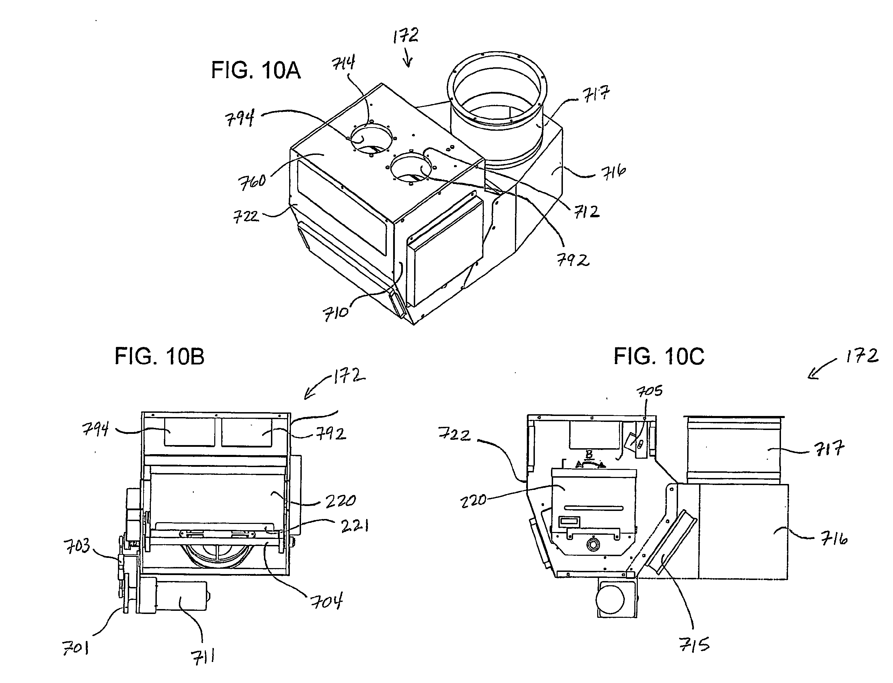

Figures 8A-10C illustrate each of four stations 166, 168, 170 and 172 into which lens assemblies carried by spindle assemblies 130 may be inserted: first station 166 (Figures 8A-C) for washing and drying the lenses, second and third stations 168, 170 (Figures 9A-B) for coating the lenses, and fourth station 172 to cure the coated lenses (Figures 10A-C). Referring back to Figure 4 a location of each station 166, 168, 170 and 172 may be seen. According to some embodiments of the present invention, each spindle assembly 130 transports a pair of lenses into all four stations, and one or both of coating stations 168, 170 may be activated for each lens pair, depending upon the prescribed coating for the particular pair; prescribed coatings for each lens pair may be entered into the coating system manually or automatically via a bar code, for example adhered to the tray in which lenses are transported into the system, which is read by a bar code reader coupled to the system in proximity to drop off point 228 (Figure 4). According to alternate embodiments, some lens pairs are only transported into one of coating stations 168, 170.

Figures 8A-C are a perspective view, a top view, and sectional schematic, respectively, of high pressure wash and drying station 166 of a lens coating system, according to an exemplary embodiment of the present invention. Figures 8A-B illustrates station 166 including a tank 807, a cover 860 and a cover insert 862 through which a first aperture 192 and a second aperture 194 are formed to accommodate lowering of lens assemblies into tank 807, for example, as illustrated in Figure 8C. Figure 8C further illustrates apertures 192, 194 optionally extended as sleeves into tank 807, and cover insert 862 fitted within an aperture 190 of plate or deck 162 (Figure 4) of the lens coating system. Figures 8A-B further illustrate two wash/dry tubes 890, each extending within tank 807, one below aperture 192 and the other below aperture 194, and each including a spray nozzle 198 and an air nozzle 896. According to the illustrated embodiment, pumps 812 supply a washing fluid, for example de-ionized water, to spray nozzles 198, each of which direct a stream 202 of the fluid, toward second major surface 28 of each lens 184, 186; and an air inlet and exhaust (not shown), each disposed below a valve 813, provides for passage of clean air to air nozzles 896 and vaporized air out from tank 807, respectively. During and/or following the washing process, lenses 184, 186 may be rotated; a rotational velocity of 1800 revolutions per minute may be suitable to help spin excess fluid off lenses in order to augment the drying process in which a stream of air is directed to lenses 184, 186 from nozzles 896. Figures 8A-C further illustrate wash/dry tubes 890 adapted to pivot about respective axes 204, per arrows A shown in Figure 8C, being coupled to pivot arms 801 which are driven by a cam plate 803, which is coupled to a gear motor 811.

Figure 9A is a perspective view of a coating element 992 for either of coating stations 168, 170 shown in Figure 4, according to an exemplary embodiment of the present invention; and Figure 9B is a sectional schematic of coating station 168/170. Figures 9B illustrates each coating element 992 mounted to a lower surface of plate or deck 162 (Figure 4) of the lens coating system, beneath an aperture 191 of deck 162. Figures 9A-B illustrate each element 992 including a tank 905 in which a nozzle 196 is disposed to direct a stream or fountain 203 of coating material onto lenses 184, 186; the coating material is fed through a filter 910 and into tube 960 that feeds into reservoir 904, below tank 905 where nozzle 196 is mounted. Figure 9A further illustrates sensor mounts 903 for digital optical sensors, for example, an FS-V20 dual digital fiber optic sensor sold by Keyence, disposed on opposing sides of tank 905; the sensors may detect when the coating material is not flowing properly. Each coating element may further include a sensor to detect when a level of coating in reservoir 904 drops below a predetermined level.

According to some embodiments of the present invention, spindle assembly 130 rotates lenses 184, 186, while stream or fountain 203 impinges upon second major surface 28 of each lens 184, 186, to help spread the coating material. When fountain 203 is turned off, spindle assembly 130 may continue to rotate lenses 184, 186 to spin off excess coating. According to an exemplary embodiment, a first rotational velocity, during fountain 203 operation, is approximately 400 revolutions per minute, and a second rotational velocity, when fountain 203 is turned off, is approximately 2000 revolutions per minute. According to an exemplary embodiment of the present invention, the coatings applied in stations 168, 170 are curable via ultraviolet (UV) light in station 172; examples of appropriate coatings include UV-NV coatings available from Ultra Optics of Brooldyn Park, MN.

Figures 10A-C are a perspective view, a side view and a front view, respectively, of curing station 172 of a lens coating system, according to an exemplary embodiment of the present invention. In order to see inside station 172, in Figure 10B, a side wall 722 is removed, and, in Figure 10C, a front wall 710 is removed. Figures 10A-B illustrate station 172 including an UV lamp 220 directed toward sleeves 792, 794, which extend below corresponding apertures 712, 714 in a top plate 760 of station 172 that would be coupled to plate or deck 162 (Figure 4) of the lens coating system; each lens 184, 186 would be lowered by spindle assembly 130 into the corresponding sleeve 792, 794 for coating curing via exposure to UV light emitted by lamp 220. Figures 10A-B further illustrate lamp 220 held in a tray 221that is mounted on a pivot shaft 704, which is coupled to a pivot arm 703 driven by a cam 701, which is, in turn, coupled to a gear motor 711. According to the illustrated embodiment, gear motor 711 rotates lamp 220 back and forth per arrow B shown in Figure 10C. Figure 10C further illustrates station 172 including an UV light intensity sensor 705, for example, provided by EIT Instrumentation Products, to monitor the curing process, and a fan 715 to cool station 172; fan 715 receives ventilation via duct hose 717 and fan duct 716. It should be noted that other types of curing stations, for example, a thermal curing station, may be incorporated into lens coating systems according to alternate embodiments of the present invention.

Figures 11A-B are a perspective view and a top view, respectively, of magazine shuttle assembly 250, first shown in Figure 4, according to some embodiments of the present invention. As previously described in conjunction with Figure 4, shuttle assembly 250 transfers each tray, having a pair of lens assemblies removed therefrom, from first, or drop off position 228 to re-loading position 240 where the same pair of lens assemblies is replaced in the tray. Figures 11A-B illustrate shuttle assembly 250 including a lowering assembly 40 and a raising assembly 70, each driven by a motor 47, i.e. a DC gear-driven motor, and each disposed on either end of a conveyor belt 21, which may also be driven by a DC gear-driven motor 48. According to the illustrated embodiment, shuttle assembly 250 lowers trays, per arrow D, in lowering assembly, transfers trays across, per arrow C, to raising assembly 70, via belt 21, and raises trays, per arrow U, in raising assembly 70; tray 104 is shown in first position 228 holding a pair of lens assemblies which will be transferred to one of spindle assemblies 130 (Figure 4) by grippers 320, 322 of pick and place unit 300 (Figures 5A-C) and tray 604 is shown in re-loading position 240 holding another pair of lens assemblies, which has been re-loaded by grippers 320, 322. A number of other trays 14, 25, 16 and 17 are shown at intermediate positions of shuttle assembly 250, in the process of being transferred from first position 228 to re-loading position 240.

Figures 11A-B further illustrate lens nest pair 244 mounted to shuttle assembly 250 and coupled to a motor 24, i.e. an A.C. gear motor, which rotates nest pair 244 about an axis 245. According to the illustrated embodiment, lens nest pair 244 provides a resting place for lens assemblies when grippers 320, 322, at first, misalign the lens assemblies with spindle adaptors 152, 154; as previously described in conjunction with Figures 7A-B, pressure sensor 131 of spindle adaptor 130 detects such a misalignment and signals grippers 320, 322 to take lens assemblies out from adaptors 152, 154, place the lens assemblies in nest pair 244, and then re-grasp the lens assemblies for aligned positioning in adaptors 152, 154. Lens nest pair 244 is further adapted to rotate each pair of lens assemblies that has been transferred by one of spindle assemblies 130 through each station of the coating system 245, in order that each of the pair may be re-loaded into a same position in the same tray from which the pair was taken. With reference to Figure 5B, it will be appreciated that, when pick and place assembly 300 rotates, per arrow R, to re-loading position 240 (Figure 4), in order to re-load the tray from which the lens assemblies were taken, each of the pair of lens assemblies will be disposed on an opposite side of the tray from its location when the tray was at first position 228 (Figure 4), thus grippers 320, 322 will drop the lens assemblies into nest pair 244, where the lens assemblies are rotated 180 degrees, and then pick up the re-oriented assemblies for reloading into the tray. According to alternate embodiments, lens assemblies need not be rotated as such, for it may not be necessary to return the assemblies to the same location in the trays, or each tray could be rotated somewhere in between first position 228 and re-loading position 240 so that the lens assemblies need not be rotated to be returned to their original positions.

In the foregoing detailed description, the invention has been described with reference to specific embodiments. However, it may be appreciated that various modifications and changes can be made without departing from the scope of the invention as set forth in the appended claims. For example, each of stations 166, 168, 170 and 172 may employ alternate means for washing/drying, coating and curing, respectively, and any of the operations may employ alternate components and activation means known to those skilled in the art; furthermore each station may be arranged according to alternate plans for example along a line rather than about a curve.

## Claims

1. A lens coating system comprising: a coating station (168,170); a spindle assembly (130) adapted to hold at least one lens (184,186) and to transfer the at least one lens into and out from the coating station; an input platform; **characterised in that** it further comprises a gripper assembly (320,322) adapted to transfer the at least one lens from the input platform to the spindle assembly.

2. The system of claim 1, wherein: the at least one lens includes a pair of lenses comprising a right lens and a left lens the spindle assembly (130) includes a first adaptor (152) to hold the right lens and a second adaptor (154) to hold the left lens; and the gripper assembly includes a pair of grippers, each of the pair of grippers adapted to transfer a corresponding lens of the pair of lenses into the corresponding adaptor of the spindle assembly.

3. The system of claim 1, wherein the at least one lens is coupled to a mounting block assembly (125) and the gripper assembly (320,322) includes a gripper adapted to grasp about the mounting block assembly.

4. The system of claim 2, wherein each of the pair of lenses is coupled to a mounting block assembly (125) and each of the pair of grippers is adapted to grasp about the corresponding mounting block assembly.

5. The system of claim 1 , wherein the at least one lens is held in a tray (104) on the input platform and further comprising an input conveyor (302) joined to the input platform for sequential conveyance of a plurality of trays to the input platform.

6. The system of claim 5, further comprising a sensor (455) disposed in proximity to the input platform, the sensor adapted to detect one of the plurality of trays on the input platform.

7. The system of claim 1, wherein the at least one lens is held in a tray (104) on the input platform and further comprising a shuttle assembly (252) joined to the input platform and adapted to transfer of the tray away from the input platform.

8. The system of claim 7, further comprising an output platform receiving the tray (104) from the shuttle assembly and wherein the gripper assembly (320,322) is further adapted to transfer the at least one lens from the spindle assembly to the tray disposed on the output platform.

9. The system of claim 8, further comprising an output conveyor (304) joined to the output platform to move the tray (104) away from the output platform.

10. The system of claim 9, further comprising a sensor (456,457) disposed in proximity to the output platform, the sensor adapted to detect when the output conveyor is filled to capacity.

11. The system of claim 1, further comprising an output platform and wherein the gripper assembly is further adapted to transfer the at least one lens (184,186) from the spindle assembly (130) to the output platform.

12. The system of claim 1, wherein: the spindle assembly (130) employs a vacuum (609) for holding the at least one lens assembly; and the at least one spindle assembly includes a pressure sensor (131) to detect a quality of the vacuum as an indicator of how the at least one lens is held.

13. The system of claim 1, further comprising a lens nest (244) and wherein the gripper assembly is further adapted to transfer the at least one lens from the spindle assembly to the lens nest.

14. The system of claim 2, further comprising: an output platform; and a pair of lens nests (244) adapted to rotate; and wherein the gripper assembly (320,322) is further adapted to transfer each of the pair of lenses from the corresponding adaptor of the spindle assembly (130) into a corresponding nest of the pair of nests and out from the pair of nests to the output platform.

15. The system of claim 1, wherein the spindle assembly (130) is adapted to spin the at least one lens at a first rotational velocity and at a second rotational velocity.

16. The system of claim 1, further comprising a washing and drying station (166) and wherein the spindle assembly (130) is further adapted to transfer the lens into and out from the washing and drying station prior to transfer into and out from the coating station.

17. The system of claim 1, further comprising a curing station (172) and wherein the spindle assembly (130) is further adapted to transfer the lens into and out from the curing station after transfer into and out from the coating station.

18. The system of claim 1, further comprising a second coating station (168,170) and wherein the spindle assembly is further adapted to transfer the lens into and out from the second coating station after transfer into and out from the coating station.

19. The system of claim 3, wherein the mounting block assembly includes a mounting block (120) and a bonding material disposed between the mounting block and a surface of the lens.

20. The system of claim 19, wherein the bonding material comprises a material selected from the group consisting of a metal alloy, an adhesive and a wax

21. The lens coating system of claim 1 or 2, further comprising a spider assembly (150) including a central axis and an arm extending therefrom; and wherein the spindle assembly is mounted to the arm, which rotates about the central axis.

22. The lens coating system of claim 1 or 2, wherein the spindle assembly (130) includes a plurality of spindle assemblies for sequential transfer of a plurality of lens pairs or lenses into, and out from the coating station.

23. The lens coating system of claim 1 or 2, wherein each of the spindle adaptors (152,154) employs vacuum to hold each lens and the spindle assembly further comprises a pressure sensor (131) to detect a quality of the vacuum as an indicator of how each lens is held.

24. The system of claim 1, wherein each of the spindle adaptors (152,154) is adapted to spin the corresponding lens at a first rotational velocity and at a second rotational velocity.

25. A method for coating a pair of eyeglass lenses, the method comprising the steps of: simultaneously loading a first lens and a second lens of the pair of lenses into a spindle assembly (130) of a coating system; transferring the lens pair into a coating station (168,170) of the coating system via the spindle assembly; and coating the lens pair within the coating station, wherein the step of loading is performed by a gripper assembly (320,322).

26. The method of claim 25, further comprising the steps of: transferring a tray (104) holding the lens pair by a conveyor to a platform; detecting the tray on the platform by means of a sensor (455); and signaling to the gripper assembly to transfer the lens pair into the system.

27. The method of claim 25, further comprising: transferring the lens pair from a tray (104) into the coating system; and transferring the lens pair back to the tray (104) after coating such that the first and second lenses of the lens pair are in a same location in the tray (104) as before coating.

## Patentansprüche

1. Linsenbeschichtungssystem, umfassend: eine Beschichtungsstation (168, 170); eine Spindelanordnung (130), die angepasst ist, um zumindest eine Linse (184, 186) zu halten und die zumindest eine Linse in die Beschichtungsstation hinein und aus ihr heraus zu übertragen; eine Eingabeplattform; **dadurch gekennzeichnet, dass** es ferner eine Greiferanordnung (320, 322) umfasst, die angepasst ist, um die zumindest ein Linse von der Eingabeplattform zur Spindelanordnung zu übertragen.

2. System nach Anspruch 1, wobei: die zumindest eine Linse ein Paar von Linsen, umfassend eine rechte Linse und eine linke Linse, umfasst; die Spindelanordnung (130) einen ersten Adapter (152) zum Halten der rechten Linse und einen zweiten Adapter (154) zum Halten der linken Linse umfasst; und die Greiferanordnung ein Paar von Greifern umfasst, wobei jeder des Paares von Greifern angepasst ist, um eine korrespondierende Linse des Paares von Linsen in den korrespondierenden Adapter der Spindelanordnung zu übertragen.

3. System nach Anspruch 1, wobei die zumindest eine Linse an eine Befestigungsblockanordnung (125) gekoppelt ist und die Greiferanordnung (320, 322) einen Greifer umfasst, der angepasst ist, um um die Befestigungsblockanordnung herum zu greifen.

4. System nach Anspruch 2, wobei jede des Paares von Linsen an eine Befestigungsblockanordnung (125) gekoppelt ist und jeder des Paares von Greifern angepasst ist, um um die korrespondierende Befestigungsblockanordnung herum zu greifen.

5. System nach Anspruch 1, wobei die zumindest eine Linse in einem Einsatz (104) auf der Eingabeplattform gehalten wird, und ferner umfassend einen Eingabeförderer (302), der mit der Eingabeplattform für eine sequentielle Beförderung einer Mehrzahl von Einsätzen zur Eingabeplattform verbunden ist.

6. System nach Anspruch 5, ferner umfassend einen Sensor (455), der in der Nähe der Eingabeplattform angeordnet ist, wobei der Sensor angepasst ist, um einen der Vielzahl von Einsätzen auf der Eingabeplattform zu detektieren.

7. System nach Anspruch 1, wobei die zumindest eine Linse in einem Einsatz (104) auf der Eingabeplattform gehalten wird, und ferner umfassend eine Shuttle-Anordnung (252), die mit der Eingabeplattform verbunden ist und angepasst ist, um den Einsatz von der Eingabeplattform weg zu übertragen.

8. System nach Anspruch 7, ferner umfassend eine Ausgabeplattform, die den Einsatz (104) von der Shuttle-Anordnung empfängt, und wobei die Greiferanordnung (320, 322) ferner angepasst ist, um die zumindest eine Linse von der Spindelanordnung zum Einsatz, der auf der Ausgabeplattform angeordnet ist, zu übertragen.

9. System nach Anspruch 8, ferner umfassend einen Ausgabeförderer (304), der mit der Ausgabeplattform verbunden ist, um den Einsatz (104) weg von der Ausgabeplattform zu bewegen.

10. System nach Anspruch 9, ferner umfassend einen Sensor (456, 457), der in der Nähe der Ausgabeplattform angeordnet ist, wobei der Sensor angepasst ist, um zu detektieren, wenn der Ausgabeförderer bis auf den letzten Platz gefüllt ist.

11. System nach Anspruch 1, ferner umfassend eine Ausgabeplattform, und wobei die Greiferanordnung ferner angepasst ist, um die zumindest eine Linse (184, 186) von der Spindelanordnung (130) zur Ausgabeplattform zu übertragen.

12. System nach Anspruch 1, wobei: die Spindelanordnung (130) ein Vakuum (609) zum Halten der zumindest einen Linsenanordnung einsetzt; und die zumindest eine Spindelanordnung einen Drucksensor (131) umfasst, um eine Qualität des Vakuums als einen Indikator, wie die zumindest eine Linse gehalten wird, zu detektieren.

13. System nach Anspruch 1, ferner umfassend ein Linsennest (244), und wobei die Greiferanordnung ferner angepasst ist, um die zumindest eine Linse von der Spindelanordnung zu dem Linsennest zu übertragen.

14. System nach Anspruch 2, ferner umfassend: eine Ausgabeplattform; und ein Paar von Linsennestern (244), die angepasst sind, sich zu drehen; und wobei die Greiferanordnung (320, 322) ferner angepasst ist, jede des Paares von Linsen vom korrespondierenden Adapter der Spindelanordnung (130) in ein korrespondierendes Nest des Paares von Nestern hinein und aus dem Paar von Nestern heraus zur Ausgabeplattform zu übertragen.

15. System nach Anspruch 1, wobei die Spindelanordnung (130) angepasst ist, um die zumindest eine Linse bei einer ersten Drehgeschwindigkeit und bei einer zweiten Drehgeschwindigkeit schnell zu drehen.

16. System nach Anspruch 1, ferner umfassend eine Wasch- und Trockenstation (166), und wobei die Spindelanordnung (130) ferner angepasst ist, um die Linse in die Wasch- und Trockenstation hinein und aus ihr heraus zu übertragen, vor dem Übertragen in die Beschichtungsstation und aus ihr heraus.

17. System nach Anspruch 1, ferner umfassend eine Härtungsstation (172), und wobei die Spindelanordnung (130) ferner angepasst ist, um die Linse in die Härtungsstation hinein und aus ihr heraus zu übertragen, nach dem Übertragen in die Beschichtungsstation hinein und aus ihr heraus.

18. System nach Anspruch 1, ferner umfassend eine zweite Beschichtungsstation (168, 170), und wobei die Spindelanordnung ferner angepasst ist, um die Linse in die zweite Beschichtungsstation hinein und aus ihr heraus zu übertragen, nach dem Übertragen in die Beschichtungsstation hinein und aus ihr heraus.

19. System nach Anspruch 3, wobei die Befestigungsblockanordnung einen Befestigungsblock (120) und ein Bindematerial, das zwischen dem Befestigungsblock und einer Oberfläche der Linse angeordnet ist, umfasst.

20. System nach Anspruch 19, wobei das Bindematerial ein Material umfasst, das ausgewählt ist aus der Gruppe bestehend aus einer Metalllegierung, einem Klebstoff und einem Wachs.

21. Linsenbeschichtungssystem nach Anspruch 1 oder 2, ferner umfassend eine Drehkreuzanordnung (150), umfassend eine Mittelachse und einen sich von dort erstreckenden Arm; und wobei die Spindelanordnung an den Arm montiert ist, der sich um die Mittelachse dreht.

22. Linsenbeschichtungssystem nach Anspruch 1 oder 2, wobei die Spindelanordnung (130) eine Mehrzahl von Spindelanordnungen für ein sequentielles Übertragen einer Mehrzahl von Linsenpaaren oder Linsen in die Beschichtungsstation hinein und aus ihr heraus umfasst.

23. Linsenbeschichtungssystem nach Anspruch 1 oder 2, wobei jeder der Spindeladapter (152, 154) Vakuum einsetzt, um jede Linse zu halten, und die Spindelanordnung ferner einen Drucksensor (131) umfasst, um eine Qualität des Vakuums als einen Indikator, wie jede Linse gehalten wird, zu detektieren.

24. System nach Anspruch 1, wobei jeder der Spindeladapter (152, 154) angepasst ist, die korrespondierende Linse bei einer ersten Drehgeschwindigkeit und bei einer zweiten Drehgeschwindigkeit schnell zu drehen.

25. Verfahren zum Beschichten eines Paares von Brillengläsern, wobei das Verfahren folgende Schritte umfasst: gleichzeitiges Laden einer ersten Linse und einer zweiten Linse des Paares von Linsen in eine Spindelanordnung (130) eines Beschichtungssystems; Übertragen des Linsenpaares in eine Beschichtungsstation (168, 170) des Beschichtungssystems über die Spindelanordnung; und Beschichten des Linsenpaares innerhalb der Beschichtungsstation, wobei der Schritt des Ladens durch eine Greiferanordnung (320, 322) durchgeführt wird.

26. Verfahren nach Anspruch 25, ferner umfassend die Schritte: Übertragen eines Einsatzes (104), der das Linsenpaar hält, mittels eines Förderers zu einer Plattform; Detektieren des Einsatzes auf der Plattform mittels eines Sensors (455); und Signalisieren an die Greiferanordnung, das Linsenpaar in das System zu übertragen.

27. Verfahren nach Anspruch 25, ferner umfassend: Übertragen des Linsenpaares von einem Einsatz (104) in das Beschichtungssystem hinein; und Übertragen des Linsenpaares zurück zum Einsatz (104) nach dem Beschichten derart, dass die ersten und zweiten Linsen des Linsenpaares im selben Ort im Einsatz (104) wie vor der Beschichtung sind.

## Revendications

1. Système de revêtement de lentille, comprenant : une station de revêtement (168, 170) ; un ensemble de broches (130) adapté de manière à tenir au moins une lentille (184, 186) et à transférer la ou les lentille(s) dans et hors de la station de revêtement ; une plate-forme d'alimentation ; **caractérisé en ce qu'**il comprend par ailleurs un ensemble de préhension (320, 322) adapté de manière à transférer la ou les lentille(s) de la plate-forme d'alimentation à l'ensemble de broches.

2. Système selon la revendication 1, dans lequel : la ou les lentilles comprend/comprennent une paire de lentilles comprenant une lentille de droite et une lentille de gauche ; l'ensemble de broches (130) comporte un premier adaptateur (152) servant à tenir la lentille de droite et un deuxième adaptateur (154) servant à tenir la lentille de gauche ; et l'ensemble de préhension comporte une paire de pinces, chacune des pinces étant adaptée de manière à transférer une lentille correspondante de la paire de lentilles dans l'adaptateur correspondant de l'ensemble de broches.

3. Système selon la revendication 1, dans lequel la ou les lentille(s) est ou sont couplée(s) à un ensemble bloc de montage (125) et où l'ensemble de préhension (320, 322) comporte une pince adaptée de manière à saisir l'ensemble bloc de montage.

4. Système selon la revendication 2, dans lequel chacune des deux lentilles est couplée à un ensemble bloc de montage (125), et où chacune des deux pinces est adaptée de manière à saisir l'ensemble bloc de montage correspondant.

5. Système selon la revendication 1, dans lequel la ou les lentille(s) est ou sont tenue(s) dans un plateau (104) sur la plate-forme d'alimentation, et comprenant en outre un transporteur d'entrée (302) assemblé à la plate-forme d'alimentation pour le transport consécutif d'une pluralité de plateaux à la plate-forme d'alimentation.

6. Système selon la revendication 5, comprenant en outre un capteur (455) disposé à proximité de la plate-forme d'alimentation, ce capteur étant adapté de manière à détecter un des plateaux de la pluralité de plateaux sur la plate-forme d'alimentation.

7. Système selon la revendication 1, dans lequel la ou les lentille(s) est ou sont tenue(s) dans un plateau (104) sur la plate-forme d'alimentation, et comprenant en outre un ensemble navette (252) assemblé à la plate-forme d'alimentation et adapté de manière à éloigner le plateau de la plate-forme d'alimentation.

8. Système selon la revendication 7, comprenant en outre une plate-forme de sortie recevant le plateau (104) de l'ensemble navette, et dans lequel l'ensemble de préhension (320, 322) est en outre adapté de manière à transférer la ou les lentille(s) de l'ensemble de broches au plateau disposé sur la plate-forme de sortie.

9. Système selon la revendication 8, comprenant en outre un transporteur de sortie (304) assemblé à la plate-forme de sortie afin d'éloigner le plateau (104) de la plate-forme de sortie.

10. Système selon la revendication 9, comprenant en outre un capteur (456, 457) disposé à proximité de la plate-forme de sortie, le capteur étant adapté de manière à détecter le moment où le transporteur de sortie est rempli jusqu'à sa limite de capacité.

11. Système selon la revendication 1, comprenant en outre une plate-forme de sortie et dans lequel l'ensemble de préhension est en outre adapté de manière à transférer la ou les lentille(s) (184, 186) de l'ensemble de broches (130) à la plate-forme de sortie.

12. Système selon la revendication 1, dans lequel l'ensemble de broches (130) utilise un vide (609) pour tenir le ou les ensembles de lentilles ; et où le ou les ensembles de broches comportent un capteur de pression (131) servant à détecter une qualité du vide pour indiquer comment la ou les lentille(s) est ou sont tenue(s).

13. Système selon la revendication 1, comprenant en outre une empreinte de lentille (244) et dans lequel l'ensemble de préhension est en outre adapté de manière à transférer la ou les lentille(s) de l'ensemble de broches à l'empreinte de lentille.

14. Système selon la revendication 2, comprenant en outre : une plate-forme de sortie ; et une paire d'empreintes de lentilles (244) adaptées de manière à tourner ; et dans lequel l'ensemble de préhension (320, 322) est en outre adapté de manière à transférer chacune des deux lentilles de l'adaptateur correspondant de l'ensemble de broches (130) dans une empreinte correspondante de la paire d'empreintes, et de la paire d'empreintes à la plate-forme de sortie.

15. Système selon la revendication 1, dans lequel l'ensemble de broches (130) est adapté de manière à faire tourner la ou les lentille(s) à une première vitesse de rotation et à une deuxième vitesse de rotation.

16. Système selon la revendication 1, comprenant en outre une station de lavage et de séchage (166) et dans lequel l'ensemble de broches (130) est en outre adapté de manière à transférer la lentille dans et hors de la station de lavage et de séchage avant de la transférer dans et hors de la station de revêtement.

17. Système selon la revendication 1, comprenant en outre une station de durcissement (172) et dans lequel l'ensemble de broches (130) est en outre adapté de manière à transférer la lentille dans et hors de la station de durcissement après le transfert dans et hors de la station de revêtement.

18. Système selon la revendication 1, comprenant en outre une deuxième station de revêtement (168, 170) et dans lequel l'ensemble de broches est en outre adapté de manière à transférer la lentille dans et hors de la deuxième station de revêtement après le transfert dans et hors de la station de revêtement.

19. Système selon la revendication 3, dans lequel l'ensemble bloc de montage comporte un bloc de montage (120) et un matériau de liaison disposé entre le bloc de montage et une surface de la lentille.

20. Système selon la revendication 19, dans lequel le matériau de liaison comprend un matériau sélectionné dans le groupe constitué par un alliage métallique, un adhésif et une cire.

21. Système de revêtement de lentille selon la revendication 1 ou 2, comprenant en outre un ensemble araignée (156) comportant un axe central et un bras qui s'étend depuis ce dernier ; et dans lequel l'ensemble de broches est monté sur le bras qui tourne autour de l'axe central.

22. Système de revêtement de lentille selon la revendication 1 ou 2, dans lequel l'ensemble de broches (130) comprend une pluralité d'ensembles à broches pour le transfert consécutif d'une pluralité de paires de lentilles ou de lentilles dans et hors de la station de revêtement.

23. Système de revêtement de lentille selon la revendication 1 ou 2, dans lequel chacun des adaptateurs de broche (152, 154) utilise le vide pour tenir chaque lentille, et l'ensemble de broches comprend en outre un capteur de pression (131) pour détecter une qualité du vide pour indiquer comment chaque lentille est tenue.

24. Système selon la revendication 1, dans lequel chacun des adaptateurs de broche (152, 154) est adapté de manière à faire tourner la lentille correspondante à une première vitesse de rotation et à une deuxième vitesse de rotation.

25. Méthode de revêtement d'une paire de lentilles de lunettes, méthode comprenant les étapes suivantes : chargement simultané d'une première lentille et d'un deuxième lentille de la paire de lentilles dans un ensemble de broches (130) d'un système de revêtement ; transfert de la paire de lentilles dans une station de revêtement (168, 170) du système de revêtement par l'intermédiaire de l'ensemble de broches ; et revêtement de la paire de lentilles à l'intérieur de la station de revêtement, dans lequel l'étape de chargement est effectuée par un ensemble de préhension (320, 322).

26. Méthode selon la revendication 25, comprenant en outre les étapes suivantes : transfert d'un plateau (104) tenant la paire de lentilles par un transporteur à une plate-forme ; détection du plateau sur la plate-forme au moyen d'un capteur (455) ; et émission d'un signal à l'ensemble de préhension pour transférer la paire de lentilles dans le système.

27. Méthode selon la revendication 25, comprenant en outre : le transfert de la paire de lentilles d'un plateau (104) dans le système de revêtement ; et le transfert en retour de la paire de lentilles au plateau (104) après revêtement de manière à ce que les première et deuxième lentilles de la paire de lentilles se retrouvent à un même emplacement dans le plateau (104) qu'avant le revêtement.
